# EUROPÄISCHE PATENTSCHRIFT

(11) **EP 4 382 438 B1**
(45) Veröffentlichungstag und Bekanntmachung des Hinweises auf die Patenterteilung: **30.10.2024**
(21) Anmeldenummer: 22211357.3
(22) Anmeldetag: 05.12.2022
(51) Int. Cl.: B65B 13/18, B65B 69/00, B25J 11/00, B65B 57/00

(54) **UMREIFUNGSBANDVORRICHTUNG SOWIE VERFAHREN ZUM BEHANDELN EINES UMREIFUNGSBANDES**
STRAPPING BAND DEVICE AND METHOD FOR TREATING A STRAPPING BAND
DISPOSITIF DE CERCLAGE ET PROCÉDÉ DE TRAITEMENT D'UN LIEN DE CERCLAGE

(43) Veröffentlichungstag der Anmeldung: 12.06.2024
(73) Patentinhaber: TITAN Umreifungstechnik GmbH & Co.KG, 58332 Schwelm (DE)
(72) Erfinder: BÜHNE, Lukas, 58332 Schwelm (DE); NÖLKE, Christian, 40627 Düsseldorf (DE); PROTZMANN, Bastian, 42289 Wuppertal (DE)
(74) Vertreter: Andrejewski - Honke Patent- und Rechtsanwälte Partnerschaft mbB

(56) Entgegenhaltungen:
- EP-A1- 3 578 469
- EP-A2- 3 578 472
- US-A1- 2007 044 603

## Beschreibung

Die Erfindung betrifft eine Umreifungsbandvorrichtung, insbesondere eine Trenneinrichtung für Umreifungsbänder, mit einem Behandlungskopf, und mit einem den Behandlungskopf tragenden Manipulator, welcher den Behandlungskopf nach Maßgabe von in einer Steuereinheit hinterlegten Befehlen bewegt. Ebenfalls Gegenstand der Erfindung ist ein Verfahren zum Behandeln und insbesondere Durchtrennen des betreffenden Umreifungsbandes nach dem Oberbegriff des geltenden Anspruches 11.

Umreifungsbandvorrichtungen kommen grundsätzlich zum Einsatz, um sogenannte Umreifungsbänder zu manipulieren. Bei den Umreifungsbändern kann es sich um solche aus Kunststoff oder auch Stahl handeln, mit deren Hilfe jeweils Packgut zusammengefasst wird. Bei dem Packgut kann es sich um Papier- oder Stoffballen, Paletten, aber auch Stahlcoils handeln.

Hier besteht das generelle Problem, dass zur Weiterverarbeitung des Packgutes die einzelnen Umreifungsbänder gelöst werden müssen. Das kann ganz grundsätzlich und manuell mit Hilfe einer Trennschere erfolgen. Allerdings ist eine solche Vorgehensweise nicht nur zeitaufwendig, sondern auch gefährlich, weil die betreffenden Umreifungsbänder typischerweise unter hoher Spannung stehen und sich nach dem Durchtrennen peitschenartig vom Packgut lösen. Dadurch sind Verletzungen eines Bedieners möglich.

Aus diesem Grund beschreibt der Stand der Technik beispielsweise nach der WO 2019/238586 A1 der Anmelderin bereits eine Trenneinrichtung für Umreifungsbänder. Diese verfügt über ein verfahrbares Andrückelement sowie einen Fuß mit einer Schubkante für das zwischen dem Fuß- und dem Andrückelement fixierbare Umreifungsband. Eine Schneidklinge sorgt für das Durchtrennen des fixierten Umreifungsbandes. Das hat sich grundsätzlich bewährt.

Um den fraglichen Behandlungskopf zwischen Umreifungsband und Packgut zu bewegen, wird typischerweise nach dem gattungsbildenden Stand der Technik entsprechend der US 2007/0044603 A1 mit einem Manipulator in Gestalt eines Roboters gearbeitet. Der Behandlungskopf ist dabei an einen Roboterarm angeschlossen und kann auf diese Weise grundsätzlich dreidimensionale Bewegungen vollführen. Dadurch lässt sich der Behandlungskopf unter das Umreifungsband schieben und kann anschließend das Umreifungsband durchtrennt werden.

Bei der bekannten Lehre nach der US 2007/0044603 A1 wird zu diesem Zweck so vorgegangen, dass der Behandlungskopf mit zwei Füßen und einer dazwischen angeordneten Schneideinrichtung ausgerüstet ist. Mit Hilfe der Füße wird das Umreifungsband geklemmt und dann durch die Schneideinrichtung getrennt. Das setzt voraus, dass die Füße unter das Umreifungsband geschoben werden können.

Eine solche Vorgehensweise lässt sich in der Praxis oftmals nicht umsetzen, weil die Füße bei der bekannten Lehre relativ ausladend und insbesondere mit großer Materialdicke ausgelegt sind. Ein Unterfahren des Umreifungsbandes setzt voraus, dass zwischen dem Packgut und dem zu durchtrennenden Umreifungsband genügend Freiraum vorhanden ist, damit die Füße überhaupt in die gewünschte Position verfahren und das Umreifungsband zum Durchtrennen festklemmen können. Ein solcher Freiraum steht nicht bei allen Packgütern zur Verfügung, beispielsweise dann nicht, wenn Stoffe, aber auch Paletten oder andere Packgüter mit einer insgesamt geschlossenen oder überwiegend geschlossenen Gesamtoberfläche umreift sind.

Vor ähnlichen Problemen steht der weitere überwiegend gattungsbildende Stand der Technik nach der DE 698 01 892 T2. Hier geht es um eine drehbare Vorrichtung und ein Verfahren zum Entfernen von Drähten eines Ballens. Dazu ist unter anderem ein Drehförderer vorgesehen, mit dessen Hilfe der Ballen gedreht wird. Dadurch können Zähne eines Trennblattes in Kontakt mit den um den Ballen gewickelten Drähten kommen und diese durchtrennen. D.h., an dieser Stelle ist eine zusätzliche Manipulation des Packgutes zwingend erforderlich, um die Drähte durchtrennen zu können. Eine solche Manipulation lässt sich typischerweise nur mit großem Aufwand realisieren und verbietet sich für eine kostengünstige und marktgängige Lösung. Hier will die Erfindung insgesamt Abhilfe schaffen.

Der Erfindung liegt das technische Problem zugrunde, eine derartige Umreifungsbandvorrichtung und insbesondere Trenneinrichtung für Umreifungsbänder so weiterzuentwickeln, dass ein einwandfreies Durchtrennen der Umreifungsbänder auch dann aufwandsarm möglich ist, wenn das Umreifungsband eng und ohne Hohlraum am Packgut anliegt. Ebenfalls soll ein entsprechendes und gattungsgemäßes Verfahren zum Behandeln und insbesondere Durchtrennen eines Umreifungsbandes in vergleichbarer Art und Weise weiterentwickelt werden.

Zur Lösung dieser technischen Problemstellung ist eine gattungsgemäße Umreifungsbandvorrichtung und insbesondere Trenneinrichtung für Umreifungsbänder im Rahmen der Erfindung dadurch gekennzeichnet, dass der Behandlungskopf fußseitig eine Schubkante an einer durchgängigen Grundplatte zum zunächst eckseitigen Unterfahren und anschließenden Einschwenken der Grundplatte unter vollständigem Unterfahren des Umreifungsbandes aufweist, wonach die Schubkante (6) als zumindest teilweise Abschrägung an der betreffenden und dem Umreifungsband (1) zugewandten Kante ausgebildet ist, wobei der Behandlungskopf (2) mit einem Klemmstempel (11) zum Fixieren des Umreifungsbandes (1) ausgerüstet ist.

D.h., erfindungsgemäß wird hier so vorgegangen, dass der Behandlungskopf in einem ersten Schritt zunächst mit seiner fußseitigen Schubkante an der durchgängigen Grundplatte das betreffende Umreifungsband eckseitig unterfährt. Ein solches eckseitiges Unterfahren unter Berücksichtigung der fußseitigen Schubkante an der durchgängigen Grundplatte gelingt auch dann, wenn das Umreifungsband eng am Packgut anliegt. Denn bei der Schubkante handelt es sich vorteilhaft um eine zumindest teilweise Abschrägung an einer dem Umreifungsband zugewandten Kante der Grundplatte.

Die Schubkante stellt dabei sicher, dass die Grundplatte zunächst eckseitig und dann mit ihrer gesamten, dem Umreifungsband zugewandten Kante unter das Umreifungsband geschoben werden kann. Dazu ist die Schubkante als zumindest teilweise Abschrägung an der betreffenden und dem Umreifungsband zugewandten Kante ausgebildet. Die Abschrägung ist dabei so ausgelegt, dass die fragliche Kante bzw. Ecke der Grundplatte bei einer Schubbewegung des Behandlungskopfes mit einer gleichsam in der Schubrichtung ansteigenden Kante bzw. wachsenden Schräge das betreffende Umreifungsband unterfährt. - Jedenfalls kann der Behandlungskopf eckseitig gleichsam unter das zu behandelnde und insbesondere zu durchtrennende Umreifungsband heruntergeschoben werden, wobei die an dieser Stelle realisierte Schubkante bzw. Abschrägung dieses Unterfahren ermöglicht.

Da an dieser Stelle der Behandlungskopf mit seiner Grundplatte lediglich eckseitig zunächst das betreffende Umreifungsband vergleichbar einem abgeflachten Spitzbeil unterfährt, sind etwaige Ausweichbewegungen des Umreifungsbandes hierbei nicht möglich. Anschließend und in einem zweiten Schritt unterfährt der Behandlungskopf mit seiner durchgängigen Grundplatte das Umreifungsband vollständig. Dazu wird der Behandlungskopf mit der Grundplatte in Richtung auf das Umreifungsband eingeschwenkt. Hierzu korrespondiert typischerweise eine Wischbewegung oder Schwenkbewegung der Grundplatte mit ihrer dem Umreifungsband zugewandten Kante sowie der hier vorgesehenen Schubkante bzw. Abschrägung, und zwar um einen im Bereich der Ecke definierten Drehpunkt. Diese Wischbewegung bzw. Schubbewegung wird so lange fortgeführt, bis die Grundplatte das Umreifungsband vollständig unterfahren hat. Hierzu korrespondiert in der Regel eine Ausrichtung der dem Umreifungsband zugewandten Kante der Grundplatte mit der daran zumindest teilweise als Abschrägung ausgebildeten Schubkante dergestalt, dass die fragliche Kante und das Umreifungsband überwiegend parallel zueinander orientiert werden. Jetzt kann das Umreifungsband behandelt und insbesondere durchtrennt werden.

In diesem Zusammenhang hat es sich weiter als günstig erwiesen, wenn der Behandlungskopf neben der Grundplatte wenigstens ein angetriebenes Transportrad und eine Schneidklinge zum Durchtrennen des fixierten Umreifungsbandes aufweist. Mit Hilfe des Transportrades kann dabei ein durch die Schneidklinge abgetrennter Bestandteil des Umreifungsbandes vom Behandlungskopf entfernt bzw. abtransportiert werden. Das Durchtrennen des Umreifungsbandes erfolgt dabei in fixiertem Zustand. Zu diesem Zweck weist der Behandlungskopf typischerweise einen Klemmstempel auf, mit dessen Hilfe das Umreifungsband fixiert wird. Anschließend sorgt die Schneidklinge dafür, dass das Umreifungsband durchtrennt wird.

Zu diesem Zweck ist der Schneidklinge im Allgemeinen eine Gegenschneide in der Grundplatte zugeordnet. Dabei arbeitet die Schneidklinge in der Regel derart, dass sie das betreffende Umreifungsband im Rahmen einer im Vergleich zur Ebene des Umreifungsbandes senkrechten Schneidbewegung durchtrennt. In diesem Zusammenhang sorgt die Gegenschneide in der Grundplatte dafür, dass bei diesem Vorgang die Schneidklinge nicht beschädigt wird bzw. auf die Grundplatte auftrifft.

Darüber hinaus ist der Behandlungskopf meistens noch mit wenigstens einem Sensor zur Erfassung der Bandlage des Umreifungsbandes am Packgut ausgerüstet. Der Sensor kann dabei vorteilhaft als optischer Sensor und beispielsweise als Laser ausgebildet sein. Außerdem ist der Sensor regelmäßig an die Steuereinheit angeschlossen. Dadurch kann die Steuereinheit nach Maßgabe von Signalen des Sensors die Schneidklinge im Behandlungskopf senkrecht zur Längserstreckung des Umreifungsbandes ausrichten.

D.h., die Schneidklinge bewegt sich bei ihrem Schneidvorgang nicht nur senkrecht zur vom Umreifungsband aufgespannten Ebene ähnlich einer Guillotine. Sondern erfindungsgemäß und von besonderer Bedeutung ist der Umstand, dass die Schneidklinge mit ihrer unteren Schneidkante senkrecht zur Längserstreckung des Umreifungsbandes, also quer, ausgerichtet wird. Dadurch erfolgt das Durchtrennen des Umreifungsbandes regelmäßig in einem rechten Winkel. Das ist insbesondere für die anschließende Förderung des abgetrennten Bestandteiles des Umreifungsbandes aus dem Behandlungskopf mit Hilfe des Transportrades von besonderer Bedeutung. Denn ansonsten können hier bei einer schrägen Abtrennung etwaige Probleme beim Bandtransport und beispielsweise der späteren Übergabe an einen Bandzerkleinerer bzw. Häcksler erfolgen, weil das nicht senkrecht abgetrennte Umreifungsband mit seiner abgeschrägten Kante in einem für den Transport des abgetrennten Teils des Umreifungsbandes realisierten Kanal verkantet oder sonstwie etwaige Verstopfungen des Behandlungskopfes in diesem Bereich möglich sind.

Mit Hilfe des Sensors und insbesondere des optischen Sensors erfolgt nun eine Banderkennung des Umreifungsbandes am Packgut, d.h. es wird festgestellt bzw. ermittelt, ob das Umreifungsband überhaupt vorhanden ist. Darüber hinaus kann ein weiterer Sensor zur Erfassung der Bandlage bzw. Längserstreckung des Umreifungsbandes realisiert sein. Dazu wird meistens mit Hilfe von Laser-Sensoren eine Distanzmessung vorgenommen. Im Rahmen dieser Distanzmessung kann das Umreifungsband in seiner Längserstreckung erfasst werden, weil die zusätzliche Materialdicke des Umreifungsbandes zu unterschiedlichen Abstandswerten im Vergleich zum Packgut führt. Im Zuge der Messung der Bandlage mag der Behandlungskopf mit dem betreffenden Sensor ein- oder mehrfach jeweils quer über das Umreifungsband und das Packgut fahren.

Dadurch ist die Steuereinheit in Abhängigkeit von den entsprechenden Signalen des optischen Sensors in der Lage, den Behandlungskopf so auszurichten, dass die Schneidklinge im Behandlungskopf mit ihrer Schneidkante senkrecht zur Längserstreckung bzw. quer des Umreifungsbandes ausgerichtet wird. Anschließend wird das Umreifungsband mit dem Klemmstempel fixiert und danach mit Hilfe der Schneidklinge geschnitten bzw. durchtrennt. Nach dem Zurückfahren des Klemmstempels lässt sich der abgetrennte Bestandteil des Umreifungsbandes mit Hilfe des angetriebenen Transportbandes aus dem Behandlungskopf fördern. Der abgetrennte Teil des Umreifungsbandes kann dann schließlich mit Hilfe einer Greifeinheit am Manipulator ergriffen sowie gegebenenfalls einem Bandzerkleinerer im allgemeinen respektive dem zuvor bereits angesprochenen Häcksler zugeführt werden. Dadurch lässt sich der abgetrennte Bestandteil des Umreifungsbandes nicht nur besonders gut handhaben, sondern ist grundsätzlich auch eine beispielsweise sortenreine Wiederverwertung möglich, wenn es sich bei dem Umreifungsband um ein Kunststoffumreifungsband oder auch ein Stahlumreifungsband handelt. Anstelle der Handhabung des Umreifungsbandes wird folglich erfindungsgemäß lediglich Schnitzelgut des zerkleinerten und entfernten Umreifungsbandes transportiert und gegebenenfalls einer Wiederverwertung zugeführt.

Nach weiterer vorteilhafter Ausgestaltung ist der Manipulator im Allgemeinen als Roboter ausgebildet. Dieser Roboter kann mit wenigstens einem Roboterarm den Behandlungskopf fixieren. Außerdem ist in der Regel auch noch eine den Roboterarm tragende und gegebenenfalls verfahrbare Basis vorgesehen. Der Roboterarm weist dabei neben dem Behandlungskopf zusätzlich noch die zuvor bereits beschriebene Greifeinheit für das abgeschnittene Ende des Umreifungsbandes auf. Mit Hilfe der Greifeinheit wird dieses abgeschnittene Ende fixiert und zu dem Bandzerkleinerer im Bedarfsfall gefördert.

Im Ergebnis werden eine Umreifungsbandvorrichtung und insbesondere Trenneinrichtung für Umreifungsbänder ebenso wie ein zugehöriges Verfahren zum Behandeln und insbesondere Durchtrennen eines Umreifungsbandes zur Verfügung gestellt, die einen praktisch vollautomatischen Betrieb bis hin zur Zerkleinerung des Umreifungsbandes zur Verfügung stellen und gewährleisten. Von besonderer Bedeutung ist in diesem Zusammenhang, dass das Umreifungsband auch dann in Anlage am Packgut durchtrennt werden kann, wenn eine dichte Anlage des Umreifungsbandes am Packgut vorliegt. D.h., im Gegensatz zum Stand der Technik benötigt die erfindungsgemäße Umreifungsbandvorrichtung und das beschriebene Verfahren keinen Hohlraum, um den Behandlungskopf zum Durchtrennen des Umreifungsbandes ansetzen und betreiben zu können. Hierin sind die wesentlichen Vorteile zu sehen.

Nachfolgend wird die Erfindung anhand einer lediglich ein Ausführungsbeispiel darstellenden Zeichnung näher erläutert; es zeigen:
- Fig. 1: schematisch die Umreifungsbandvorrichtung,
- Fig. 2: die Umreifungsbandvorrichtung in einer perspektivischen Übersicht und
- Fig. 3A bis 3D: die Umreifungsbandvorrichtung in einer Detailansicht bei einem Trennvorgang eines Umreifungsbandes.

In den Figuren ist eine Umreifungsbandvorrichtung und konkret eine Trenneinrichtung für Umreifungsbänder 1 dargestellt. Die Umreifungsbandvorrichtung bzw. Trenneinrichtung ist im Wesentlichen zweiteilig ausgelegt, verfügt nämlich über einen Behandlungskopf 2 und einen den Behandlungskopf 2 tragenden Manipulator 3. Bei dem Manipulator 3 handelt es sich nach dem Ausführungsbeispiel um einen Roboter 3. Der Roboter 3 ist seinerseits mit wenigstens einem Roboterarm 3a und einer den Roboterarm 3a tragenden Basis 3b ausgerüstet. Die Basis 3b kann dabei sowohl stationär als auch verfahrbar ausgebildet sein. Dazu mag die Badis 3b drehbar ausgebildet und beispielsweise auf Schienen verfahrbar sein.

Der Behandlungskopf 2 wird nun mit Hilfe des Manipulators bzw. Roboters 3 verfahren, und zwar nach Maßgabe von in einer Steuereinheit 4 hinterlegten Befehlen bewegt. Dazu ist die Steuereinheit 4 mit entsprechenden Antrieben des Manipulators bzw. Roboters 3 verbunden. Außerdem wird mit Hilfe der Steuereinheit 4 der Behandlungskopf 2 angesteuert.

Von besonderer erfindungswesentlicher Bedeutung ist nun der Umstand, dass der Behandlungskopf 2 fußseitig eine Schubkante 6 an einer durchgängigen Grundplatte 5 aufweist. Die Grundplatte 5 ist dabei größtenteils rechteckig ausgebildet. Außerdem erkennt man, dass die Schubkante 6 an einer dem Umreifungsband 1 zugewandten Kante 5a der rechteckförmigen Grundplatte 5 realisiert ist. Gegenüberliegend dieser dem Umreifungsband 1 zugewandten Kante 5a der Grundplatte 5 ist eine weitere und in den Figuren zu erkennende Kante 5b vorgesehen. Bei den beiden Kanten 5a, 5b der Grundplatte 5 handelt es sich jeweils um Ihre Längskanten.

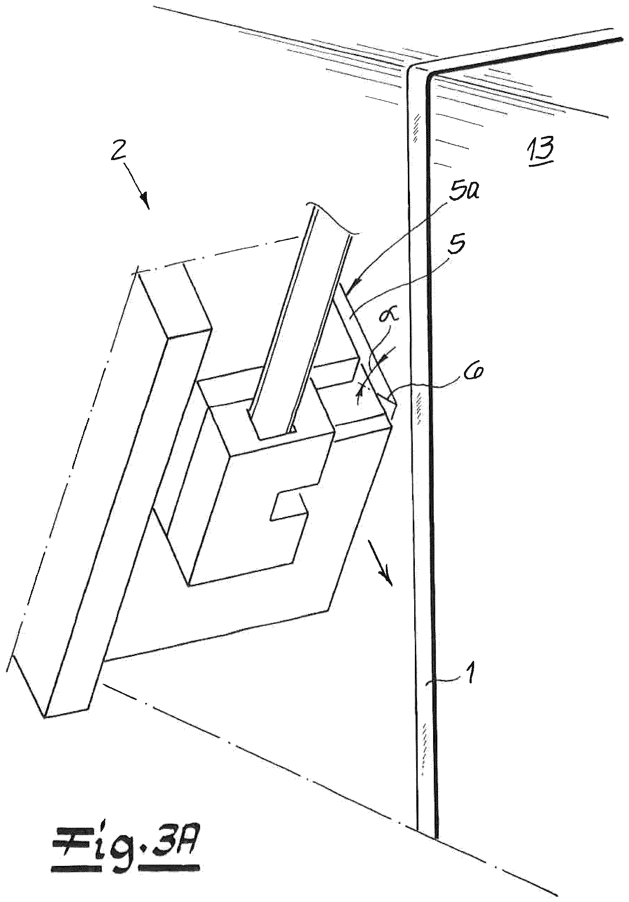

Die an der dem Umreifungsband 1 zugewandten Kante 5a realisierte Schubkante 6 an der Grundplatte 5 ist nach dem Ausführungsbeispiel als zumindest teilweise Abschrägung 6 der Grundplatte 5 ausgebildet. Tatsächlich ist die Abschrägung 6 so ausgelegt und gestaltet, dass bei einem Unterfahren des Umreifungsbandes 1, wie es in der Figurenabfolge 3A bis 3D im Detail dargestellt ist und nachfolgend noch näher erläutert wird, die fragliche Abschrägung 6 so ausgerichtet ist, dass bei der in den Fig. 3A bis 3D angedeuteten Schubbewegung S des Behandlungskopfes 2 die Abschrägung 6 mit ihrer ansteigenden Flanke auf das Umreifungsband 1 trifft und dieses unterfahren kann, wie nachfolgend noch näher erläutert wird. Dabei schließen die fragliche Flanke der Abschrägung 6 und eine Grundfläche der Grundplatte 5 nach dem Ausführungsbeispiel einen Winkel α für die Abschrägung ein, welcher Werte von ca. 20° bis 40° und nach dem Ausführungsbeispiel in etwa 30° annimmt. Das gilt selbstverständlich nur beispielhaft.

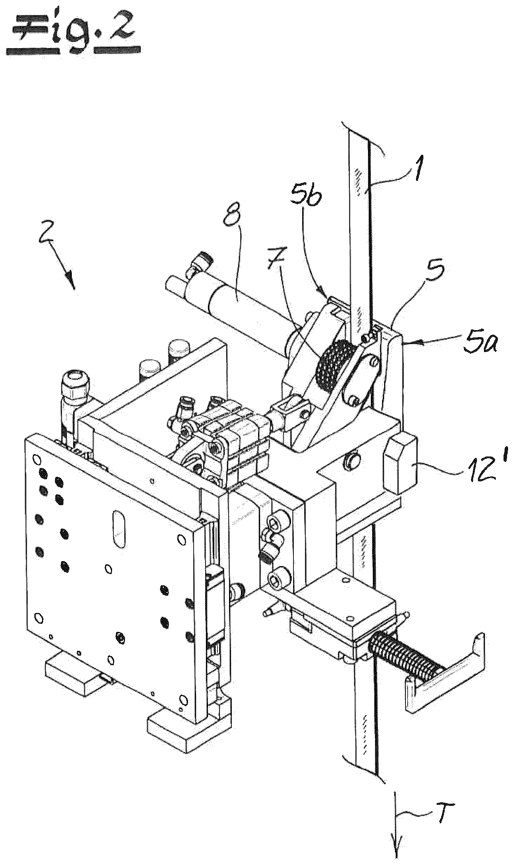

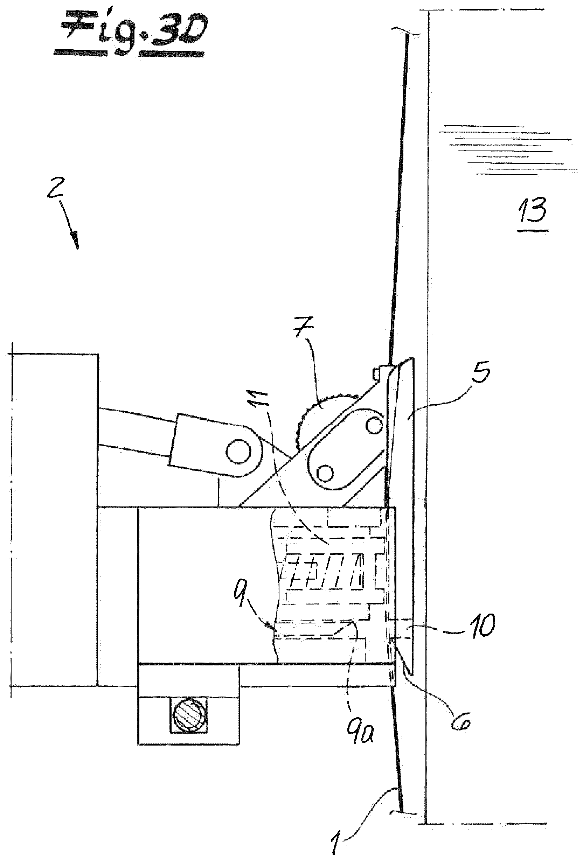

Anhand der Fig. 2 erkennt man, dass der Behandlungskopf 2 neben der bereits beschriebenen Grundplatte 5 wenigstens ein angetriebenes Transportrad 7 aufweist. Bei dem an dieser Stelle realisierten Antrieb 8 für das Transportrad 7 handelt es sich nach dem Ausführungsbeispiel um einen Druckluftmotor, was selbstverständlich nur beispielhaft gilt. Darüber hinaus ist noch eine Schneidklinge 9 realisiert, welche zum Durchtrennen des fixierten Umreifungsbandes 1 dient. Der Trennvorgang erfolgt dabei dergestalt, dass die Schneidklinge 9 mit ihrer frontseitigen Schneidkante 9a senkrecht zur vom Umreifungsband 1 aufgespannten Ebene und folglich auch senkrecht zur Ebene der Grundplatte 5 verfährt. Damit bei diesem Vorgang die Grundplatte 5 nicht beschädigt wird, ist der Schneidklinge 9 eine Gegenschneide 10 in der Grundplatte 5 zugeordnet (vgl. Fig. 3D).

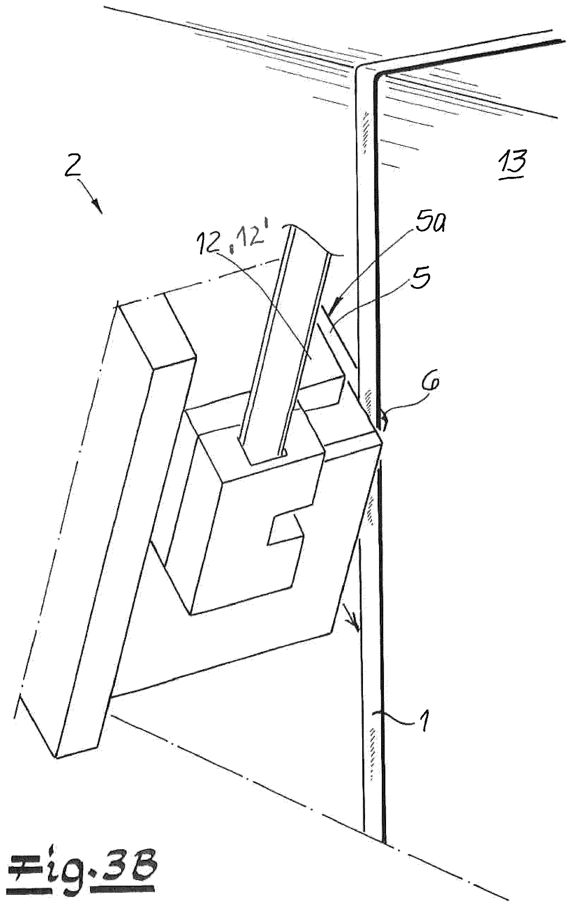

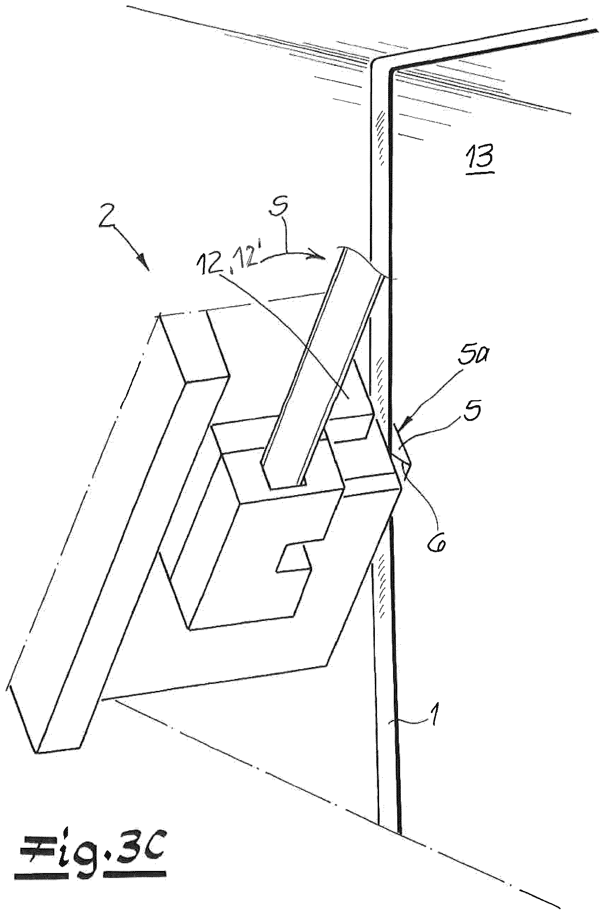

Zusätzlich erkennt man noch einen Klemmstempel 11 als Bestandteil des Behandlungskopfes 2 zum Fixieren des Umreifungsbandes 1. Schließlich ist der Behandlungskopf 2 noch mit wenigstens einem Sensor 12 zur Banderkennung ausgerüstet. D.h., mit dessen Hilfe des Sensors 12 wird das Vorhandensein des Umreifungsbandes 1 als solches festgestellt. Zusätzlich und ergänzend mag ein weiterer und im Detail lediglich in der Fig. 2 zu erkennender Sensor 12' vorgesehen sein, mit dessen Hilfe die Bandlage des Umreifungsbandes 1 am in den Fig. 3A bis 3D zu erkennenden Packgut 13 erfasst werden kann. In den Fig. 3B und 3C sind beide Sensoren 12, 12` lediglich schmematisch hinsichtlich ihrer Lage im respektive am Behandlungskopf 2 wiedergegeben.

Bei dem Sensor 12 bzw. 12' handelt es sich nach dem Ausführungsbeispiel um einen optischen Sensor, der beispielsweise als Laser ausgebildet ist oder sein kann. Der Sensor 12, 12' ist dabei wie der gesamte Behandlungskopf 2, also insbesondere auch der Antrieb 8, an die Steuereinheit 4 angeschlossen. Dadurch kann die Steuereinheit 4 nach Maßgabe von Signalen des Sensors 12, 12' die Schneidklinge 9 und insbesondere deren frontseitige Schneidkante 9a im Behandlungskopf 2 so ausrichten, dass die Schneidkante 9a senkrecht zur Längserstreckung des Umreifungsbandes 1 ausgerichtet wird, wie dies in der vergrößerten Darstellung der Fig. 3D im Detail wiedergegeben ist. Eine solche senkrechte Ausrichtung der Schneidkante 9a und damit auch der Schneidklinge 9 sowie als Folge hiervon auch des mit Hilfe der Schneidklinge 9 durchgeführten Trennschnittes des Umreifungsbandes 1 ist von besonderer Bedeutung, damit der abgetrennte Bestandteil des Umreifungsbandes 1 problemlos mit Hilfe des Transportrades 7 beispielsweise nach dem Trennvorgang aus dem Behandlungskopf 2 gefördert werden kann, und zwar ohne dass an dieser Stelle etwaige Verkantungen oder Blockaden im Innern des Behandlungskopfes 2 beobachtet werden.

Zu diesem Zweck ist die Auslegung so getroffen, dass der Sensor 12 bzw. 12' das Packgut 13 inklusive dem daran angeordneten Umreifungsband 1 abtastet, indem der Sensor 12, 12' entlang der Oberfläche des Parkgutes 13 verfahren wird und dabei das zu durchtrennende Umreifungsband 1 passiert. Im Rahmen zumindest einer Hin- und Herbewegung des Behandlungskopfes 2 mit dem Sensor 12, 12', wie sie unschwer gesteuert durch die Steuereinheit 4 mit Hilfe des Manipulators bzw. Roboters 3 realisiert werden kann, lässt sich nun das Vorhandensein und die exakte Längsorientierung des Umreifungsbandes 1 am Packgut 13 feststellen. Das ist anschließend von Bedeutung, wenn der Behandlungskopf 2 mit seiner Grundplatte 5 das Umreifungsband 1 unterfährt und das Umreifungsband 1 abschließend mit Hilfe der Schneidklinge 9 durchtrennt wird. Denn hierbei kommt es darauf an, dass die Schneidklinge 9 mit ihrer frontseitigen Schneidkante 9a senkrecht zur Längserstreckung des Umreifungsbandes 1 ausgerichtet ist, wie dies die vergrößerte Darstellung in der Fig. 3D erläutert.

D.h., mit Hilfe des Sensors 12' wird die Bandlage des Umreifungsbandes 1 am Packgut 13 erfasst und der Sensor 12 dient generell zur Banderkennung des Umreifungsbandes 1. Anschließend wird der Behandlungskopf 2 mit seiner Schneidklinge 9 senkrecht zur Längserstreckung des Umreifungsbandes 1 ausgerichtet. Danach wird das Umreifungsband 1 mit Hilfe des Klemmstempels 11 fixiert und abschließend unter Rückgriff auf die Schneidklinge 9 geschnitten.

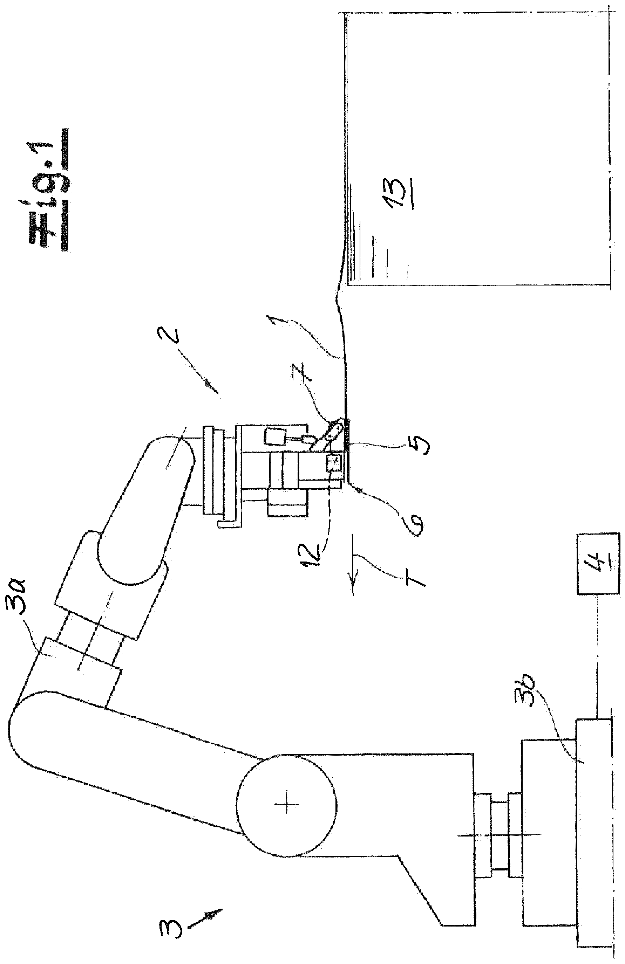

Nach Zurückfahren des Klemmstempels 11 wird das Umreifungsband 1 bzw. der abgetrennte Bestandteil des Umreifungsbandes 1 mit Hilfe des durch den Antrieb 8 bewegten Transportrades 7 aus dem Behandlungskopf 2 gefördert, und zwar entlang der in der Fig. 1 angedeuteten Transportrichtung T. Das folglich aus dem Behandlungskopf 2 herausgeförderte abgetrennte Umreifungsband 1 wird dabei ausgangsseitig des Behandlungskopfes 2 von einer nicht ausdrücklich dargestellten Greifeinheit als Bestandteil des Manipulators bzw. Roboters 3 ergriffen. Dadurch kann der Manipulator bzw. Roboter 3 unter Rückgriff auf die Greifeinheit das abgetrennte Umreifungsband 1 gegebenenfalls einem ebenfalls nicht dargestellten Bandzerkleinerer zuführen. In diesem Bandzerkleinerer mag das Umreifungsband 1 zerkleinert werden. Falls es sich hierbei beispielhaft um ein Kunststoffband oder Stahlband handelt, lassen sich anschließend die ausgangsseitig des Bandzerkleinerers zur Verfügung stehenden Schnipsel einer Wiederverwertung zuführen, wie dies einleitend bereits beschrieben wurde.

Die Abtastung der Bandlage des Umreifungsbandes 1 mit Hilfe des Sensors bzw. optischen Sensors 12' erfolgt dabei derart, dass der an dieser Stelle realisierte Laser über das Packgut 13 und das jeweils das Packgut 13 umschlingende Umreifungsband 1 gefahren wird. Da das Umreifungsband 1 über eine bestimmte Materialdicke verfügt, kann aus Abstandsmessungen im Vergleich zum Packgut 13 auf die Lage des Umreifungsbandes 1 und seine Längserstreckung mit Hilfe des Sensors 12' zur Bestimmung der Bandlage rückgeschlossen werden.

Von entscheidender erfinderischer Bedeutung ist nun der in den Figuren 3A bis 3D im Detail dargestellte Vorgang des Unterfahrens des Umreifungsbandes 1 mit Hilfe der Grundplatte 5 am Behandlungskopf 2, welcher dem Trennvorgang des Umreifungsbandes 1 vorgeschaltet ist, wie er zuvor im Detail beschrieben wurde. Tatsächlich erschließt sich dieser Vorgang des Unterfahrens anhand einer Abfolge der einzelnen Funktionsstellungen in den Figuren 3A bis 3D. Zuvor bzw. gleichzeitig ist hierbei zunächst einmal die Position des Umreifungsbandes 1 am Packgut 13 bzw. das generelle Vorhandensein des Umreifungsbandes 1 mit Hilfe des Sensors 12 und die Bandlage des Umreifungsbandes 1 mit Hilfe des Sensors 12' erfasst worden.

Tatsächlich wird zum Unterfahren des Umreifungsbandes 1 im Rahmen der Erfindung so vorgegangen, dass der Behandlungskopf 2 mit seiner fußseitigen Schubkante 6 an der durchgängigen Grundplatte 5 das betreffende Umreifungsband 1 zunächst eckseitig vergleichbar einem abgeflachten Spitzbeil unterfährt. Das erkennt man anhand der Abfolge der Figuren 3A und 3B. Hier kann man nachvollziehen, wie sich der Behandlungskopf 2 mit seiner einen Ecke dem Umreifungsband 1 nähert.

Tatsächlich handelt es sich bei der fraglichen Ecke um die Ecke des Behandlungskopfes 2, welche zunächst einmal an der dem Umreifungsband 1 zugewandten Kante 5a der Grundplatte 5 mit der dortigen Schubkante bzw. Abschrägung 6 ausgerüstet ist. Außerdem erkennt man, dass die betreffende Ecke benachbart zum Sensor bzw. optischen Sensor 12 angeordnet ist, so dass mit Hilfe des optischen Sensors 12 anschließend der nachfolgende Vorgang des Einschwenkens in den Figuren 3C und 3D überprüft und nachvollzogen werden kann sowie zugleich sichergestellt ist, dass in eingeschwenktem Zustand die Schneidkante 9a und damit auch die Schneidklinge 9 jeweils senkrecht zur Längserstreckung des betreffenden Umreifungsbandes 1 orientiert sind.

Dabei wird nach dem anhand der Fig. 3A und 3B nachvollziehbaren und zunächst eckseitigen Unterfahren des Umreifungsbandes 1 mit Hilfe der durchgängigen Grundplatte 5 anschließend die Grundplatte 5 und damit auch der Behandlungskopf 2 in Richtung auf das Umreifungsband 1 eingeschwenkt, so dass es zu einem vollständigen Unterfahren des Umreifungsbandes im Rahmen der Abfolge der Fig. 3C und 3D kommt. Dieser Einschwenkvorgang stellt sich dabei im Endeffekt so dar, dass der Behandlungskopf 2 hierbei ähnlich einer Wisch- oder Schwenkbewegung rotiert wird, wie dies der zu der betreffenden Schubbewegung S gehörige Pfeil in der Figur 3C andeutet. Bei diesem Schwenkvorgang fungiert die bereits das Umreifungsband 2 unterfahrene Ecke der Grundplatte 5 als gleichsam Drehpunkt. Auf diese Weise kann die Schubkante bzw. Abschrägung 6 an der dem Umreifungsband 1 zugewandten Kante 5a der Grundplatte 5 peu à peu das Umreifungsband 1 unterfahren.

Das hat zur Folge, dass hierdurch auch selbst eng am Packgut 13 anliegende Umreifungsbänder 1 mit Hilfe der Grundplatte 5 unterfahren und anschließend vom Packgut 13 entfernt werden können. Der Vorgang des in den Fig. 3C und 3D nachvollziehbaren Einschwenkens des Behandlungskopfes 2 bzw. seiner Grundplatte 5 in Richtung auf das Umreifungsband 1 und das vollständige Unterfahren des Umreifungsbandes 1 wird dabei so weit fortgeführt, bis die Schneidklinge 9 mit ihrer fußseitigen Schneidkante 9a senkrecht zur Längserstreckung des betreffenden Umreifungsbandes 1 ausgerichtet ist. Dieser Vorgang kann mit Hilfe des Sensors bzw. optischen Sensors 12 nachvollzogen werden, weil die Bandlage des Umreifungsbandes 1 feststeht und somit die Steuereinheit 4 den Behandlungskopf 2 entsprechend durch Verfahren des Manipulators bzw. Roboters 3 ausrichten kann. Anschließend wird das Umreifungsband 3 mit Hilfe des Klemmstempels 11 fixiert, danach unter Rückgriff auf die Schneidklinge 9 geschnitten und abschließend das abgetrennte Umreifungsband 1 aus dem Behandlungskopf 2 in der Transportrichtung T gefördert, von der nicht dargestellten Greifeinheit des Manipulators 3 ergriffen sowie dem Bandzerkleinerer zugeführt.

## Patentansprüche

1. Umreifungsbandvorrichtung, insbesondere Trenneinrichtung für Umreifungsbänder (1), mit einem Behandlungskopf (2), und mit einem den Behandlungskopf (2) tragenden Manipulator (3), welcher den Behandlungskopf (2) nach Maßgabe von in einer Steuereinheit (4) hinterlegten Befehlen bewegt,
**dadurch gekennzeichnet, dass**
der Behandlungskopf (2) fußseitig eine Schubkante (6) an einer durchgängigen Grundplatte (5) zum zunächst eckseitigen Unterfahren und anschließenden Einschwenken der Grundplatte (5) unter vollständigem Unterfahren des Umreifungsbandes (1) aufweist, wonach
die Schubkante (6) als zumindest teilweise Abschrägung an der betreffenden und dem Umreifungsband (1) zugewandten Kante ausgebildet ist, wobei
der Behandlungskopf (2) mit einem Klemmstempel (11) zum Fixieren des Umreifungsbandes (1) ausgerüstet ist.

2. Vorrichtung nach Anspruch 1, **dadurch gekennzeichnet, dass** die Grundplatte (5) im Wesentlichen rechteckig gestaltet ist.

3. Vorrichtung nach Anspruch 1 oder 2, **dadurch gekennzeichnet, dass** die Schubkante (6) als zumindest teilweise Abschrägung (6) an einer dem Umreifungsband (1) zugewandten Kante (5a) der Grundplatte (5) ausgebildet ist.

4. Vorrichtung nach einem der Ansprüche 1 bis 3, **dadurch gekennzeichnet, dass** der Behandlungskopf (2) neben der Grundplatte (5) wenigstens ein angetriebenes Transportrad (7) und eine Schneidklinge (9) zum Durchtrennen des fixierten Umreifungsbandes (1) aufweist.

5. Vorrichtung nach Anspruch 3 oder 1, **dadurch gekennzeichnet, dass** der Schneidklinge (9) eine Gegenschneide (10) in der Grundplatte (5) zugeordnet ist.

6. Vorrichtung nach einem der Ansprüche 1 bis 5, **dadurch gekennzeichnet, dass** der Behandlungskopf (2) mit wenigstens einem Sensor (12) zur Banderkennung des Umreifungsbandes (1) am Packgut (13) ausgerüstet ist.

7. Vorrichtung nach Anspruch 6, **dadurch gekennzeichnet, dass** der Sensor (12) als optischer Sensor (12), beispielsweise Laser, ausgebildet ist.

8. Vorrichtung nach Anspruch 6 oder 7, **dadurch gekennzeichnet, dass** der Sensor (12) an die Steuereinheit (4) angeschlossen ist, welche nach Maßgabe seiner Signale die Schneidklinge (9) im Behandlungskopf (2) senkrecht zur Längserstreckung des Umreifungsbandes (1) ausrichtet.

9. Vorrichtung nach einem der Ansprüche 1 bis 8, **dadurch gekennzeichnet, dass** der Manipulator (3) als Roboter (3) ausgebildet ist, welcher mit wenigstens einem Roboterarm (3a) den Behandlungskopf (2) fixiert und eine den Roboterarm (3a) tragende, gegebenenfalls verfahrbare, Basis (3b) aufweist.

10. Vorrichtung nach Anspruch 9, **dadurch gekennzeichnet, dass** der Roboterarm (3a) neben dem Behandlungskopf (2) zusätzlich eine Greifeinheit für ein abgeschnittenes Ende des Umreifungsbandes (1) aufweist.

11. Verfahren zum Behandeln, insbesondere Durchtrennen, eines Umreifungsbandes (1), mit Hilfe eines Behandlungskopfes (2), vorzugsweise zum Betrieb der Umreifungsbandvorrichtung nach einem der Ansprüche 1 bis 11, wonach ein Manipulator (3) den Behandlungskopf (2) trägt und nach Maßgabe von in einer Steuereinheit (4) hinterlegten Befehlen bewegt,
**dadurch gekennzeichnet, dass**
der Behandlungskopf (2) mit einer fußseitigen Schubkante (6) an einer durchgängigen Grundplatte (5) das betreffende Umreifungsband (1) eckseitig unterfährt und anschließend der Behandlungskopf (2) mit seiner Grundplatte (5) in Richtung auf das Umreifungsband (1) eingeschwenkt wird und dieses vollständig unterfährt, wonach
die Schubkante (6) als zumindest teilweise Abschrägung an der betreffenden und dem Umreifungsband (1) zugewandten Kante ausgebildet ist, wobei
der Behandlungskopf (2) mit einem Klemmstempel (11) zum Fixieren des Umreifungsbandes (1) ausgerüstet ist.

12. Verfahren nach Anspruch 11, **dadurch gekennzeichnet, dass** mit Hilfe eines Sensors (12) eine Banderkennung des Umreifungsbandes (1) am Packgut (13) erfolgt und der Behandlungskopf (2) mit seiner Schneidklinge (9) senkrecht zur Längserstreckung des Umreifungsbandes (1) ausgerichtet wird.

13. Verfahren nach Anspruch 11 oder 12, **dadurch gekennzeichnet, dass** das Umreifungsband (1) mit einem Klemmstempel (11) fixiert und anschließend mit Hilfe der Schneidklinge (9) geschnitten wird.

14. Verfahren nach einem der Ansprüche 11 bis 13, **dadurch gekennzeichnet, dass** das Umreifungsband (1) nach Zurückfahren des Klemmstempels (11) mit Hilfe eines angetriebenen Transportrades (7) aus dem Behandlungskopf (2) gefördert und von einer Greifeinheit des Manipulators ergriffen sowie gegebenenfalls einem Bandzerkleinerer zugeführt wird.

## Claims

1. Strapping device, in particular separation device for straps (1), having a handling head (2), and having a manipulator (3), which carries the handling head (2) and moves the handling head (2) according to commands stored in a control unit (4),
**characterized in that**
the handling head (2) has a pushing edge (6) at the foot end on a continuous base plate (5) for initially moving the base plate (5) under on the corner side and then swivelling it in while completely moving under the strap (1), whereby
the pushing edge (6) is designed as an at least partial chamfer on the edge in question and facing the strap (1), wherein
the handling head (2) is equipped with a clamping stamp (11) for fixing the strap (1).

2. Device according to Claim 1, **characterized in that** the base plate (5) is substantially rectangular.

3. Device according to Claim 1 or 2, **characterized in that** the pushing edge (6) is designed as an at least partial chamfer (6) on an edge (5a) of the base plate (5) facing the strap (1).

4. Device according to one of Claims 1 to 3, **characterized in that** the handling head (2) has, in addition to the base plate (5), at least one driven transport wheel (7) and a cutting blade (9) to cut through the fixed strap (1) .

5. Device according to Claim 3 or 1, **characterized in that** the cutting blade (9) is associated with a counter blade (10) in the base plate (5).

6. Device according to one of Claims 1 to 5, **characterized in that** the handling head (2) is fitted with at least one sensor (12) for recognition of the strap (1) on the packaged item (13).

7. Device according to Claim 6, **characterized in that** the sensor (12) is designed as an optical sensor (12), for example a laser.

8. Device according to Claim 6 or 7, **characterized in that** the sensor (12) is connected to the control unit (4), which aligns the cutting blade (9) in the handling head (2) perpendicular to the longitudinal extension of the strap (1) according to its signals.

9. Device according to one of Claims 1 to 8, **characterized in that** the manipulator (3) is designed as a robot (3), which fixes the handling head (2) with at least one robot arm (3a) and has a potentially moveable base (3b) supporting the robot arm (3a).

10. Device according to Claim 9, **characterized in that** the robot arm (3a), in addition to the handling head (2), also has a gripper unit for a cut-off end of the strap (1) .

11. Method for handling, in particular cutting, a strap (1), using a handling head (2), preferably to operate the strapping device according to one of Claims 1 to 11, whereby a manipulator (3) carries the handling head (2) and moves it according to commands stored in a control unit (4),
**characterized in that**
the handling head (2) moves under the strap (1) in question on the corner with a pushing edge (6) on the foot end on a continuous base plate (5) and then the handling head (2) is swivelled in with its base plate (5) in the direction of the strap (1) and moves completely under the latter, whereby
the pushing edge (6) is designed as an at least partial chamfer on the edge in question and facing the strap (1), wherein
the handling head (2) is equipped with a clamping stamp (11) for fixing the strap (1).

12. Method according to Claim 11, **characterized in that** a sensor (12) is used to recognize the strap (1) on the packaged item (13) and the handling head (2) is aligned with its cutting blade (9) perpendicular to the longitudinal extension of the strap (1).

13. Method according to Claim 11 or 12, **characterized in that** the strap (1) is fixed with a clamping stamp (11) and is then cut using the cutting blade (9).

14. Method according to one of Claims 11 to 13, **characterized in that** once the clamping stamp (11) has been retracted, the strap (1) is conveyed out of the handling head (2) using a driven transport wheel (7) and gripped by a gripper unit of the manipulator and, if necessary, fed to a strap cutter.

## Revendications

1. Dispositif de bande de cerclage, en particulier système de séparation pour bandes de cerclage (1), avec une tête de traitement (2) et avec un manipulateur (3) portant la tête de traitement (2), lequel déplace la tête de traitement (2) en fonction des instructions mémorisées dans l'unité de commande (4),
**caractérisé en ce que**
la tête de traitement (2) comporte côté inférieur un bord de poussée (6) sur une plaque de base (5) continue pour un passage en dessous côté angle d'abord et une rentrée par pivotement par la suite de la plaque de base (5) avec un passage complètement en dessous de la bande de cerclage (1),
le bord de poussé (6) étant constituée au moins en partie comme un chanfrein sur le bord concerné et tourné vers la bande de cerclage (1), sachant que
la tête de traitement (2) est dotée d'un poinçon de blocage (11) pour fixer la bande de cerclage (1).

2. Dispositif selon la revendication 1, **caractérisé en ce que** la plaque de base (5) est conçue pour l'essentiel rectangulaire.

3. Dispositif selon la revendication 1 ou 2, **caractérisé en ce que** le bord de poussée (6) est constitué au moins en partie sous la forme d'un chanfrein (6) sur un bord (5a) de la plaque de base (5) tourné vers la bande de cerclage (1).

4. Dispositif selon l'une quelconque des revendications 1 à 3, **caractérisé en ce que** la tête de traitement (2) comporte en plus de la plaque de base (5) au moins une roue de transport (7) entraînée et une lame de coupe (9) pour le sectionnement de la bande de cerclage (1) fixée.

5. Dispositif selon la revendication 3 ou 1, **caractérisé en ce qu'**un contre-tranchant (10) est attribué à la lame de coupe (9) dans la plaque de base (5).

6. Dispositif selon l'une quelconque des revendications 1 à 5, **caractérisé en ce que** la tête de traitement (2) est dotée d'au moins un capteur (12) pour l'identification de bande de la bande de cerclage (1) sur la marchandise emballée (13).

7. Dispositif selon la revendication 6, **caractérisé en ce que** le capteur (12) est constitué sous la forme d'un capteur optique (12), par exemple un laser.

8. Dispositif selon la revendication 6 ou 7, **caractérisé en ce que** le capteur (12) est raccordé à l'unité de commande (4), laquelle oriente, en fonction de ses signaux, la lame de coupe (9) dans la tête de traitement (2) perpendiculairement à l'extension longitudinale de la bande de cerclage (1).

9. Dispositif selon l'une quelconque des revendications 1 à 8, **caractérisé en ce que** le manipulateur (3) est constitué sous la forme d'un robot (3), lequel fixe la tête de traitement (2) avec au moins un bras de robot (3a) et comporte une base (3b), le cas échéant mobile, portant le bras de robot (3a).

10. Dispositif selon la revendication 9, **caractérisé en ce que** le bras de robot (3a) comporte en plus de la tête de traitement (2) en complément une unité de préhension pour une extrémité sectionnée de la bande de cerclage (1) .

11. Procédé de traitement, en particulier de séparation, d'une bande de cerclage (1) à l'aide d'une tête de traitement (2), de préférence pour faire fonctionner le dispositif de bande de cerclage selon l'une quelconque des revendications 1 à 11, un manipulateur (3) portant et déplaçant la tête de traitement (2) en fonction des instructions mémorisées dans une unité de commande (4)
**caractérisé en ce que**
la tête de traitement (2) passe côté angle avec un bord de poussée (6) côté inférieur sur une plaque de base (5) continue sous la bande de cerclage (1) concernée et la tête de traitement (2) avec sa plaque de base (5) est ensuite rentrée par pivotement en direction de la bande de cerclage (1) et passe complètement sous celle-ci,
le bord de poussée (6) étant constitué au moins en partie sous la forme d'un chanfrein sur le bord concerné et tourné vers la bande de cerclage (1), sachant que
la tête de traitement (2) est dotée d'un poinçon de blocage (11) pour fixer la bande cerclage (1).

12. Procédé selon la revendication 11, **caractérisé en ce qu'**une identification de bande de la bande cerclage (1) a lieu sur la marchandise emballée (13) à l'aide d'un capteur (12) et la tête de traitement (2) est orientée avec sa lame de coupe (9) perpendiculairement à l'extension longitudinale de la bande de cerclage (1).

13. Procédé selon la revendication 11 ou 12, **caractérisé en ce que** la bande de cerclage (1) est fixée avec un poinçon de blocage (11) et est ensuite coupée à l'aide de la lame de coupe (9).

14. Procédé selon l'une quelconque des revendications 11 à 13, **caractérisé en ce que** la bande de cerclage (1) est après retour du poinçon de blocage (11) transportée à l'aide d'une roue de transport (7) entraînée hors de la tête de traitement (2) et saisie par une unité de préhension du manipulateur et le cas échéant acheminée à un broyeur de bande.
